# EUROPÄISCHE PATENTSCHRIFT

(11) **EP 3 228 171 B1**
(45) Veröffentlichungstag und Bekanntmachung des Hinweises auf die Patenterteilung: **29.08.2018**
(21) Anmeldenummer: 17401032.2
(22) Anmeldetag: 31.03.2017
(51) Int. Cl.: A01C 15/04, A01C 19/02

(54) **HYDRAULIKANLAGE**
HYDRAULIC SYSTEM
INSTALLATION HYDRAULIQUE

(30) Priorität: 06.04.2016 DE 102016106246
(43) Veröffentlichungstag der Anmeldung: 11.10.2017
(73) Patentinhaber: Amazonen-Werke H. Dreyer GmbH & Co. KG, 49205 Hasbergen (DE)
(72) Erfinder: Hoffmann, Karl-Peter, 27798 Hude (DE)

(56) Entgegenhaltungen:
- EP-A1- 1 782 669
- WO-A1-2012/029953
- WO-A2-2015/086933
- DE-A1-102011 104 921

## Beschreibung

Die Erfindung betrifft eine Hydraulikanlage gemäß des Oberbegriffes des Patentanspruches 1.

Eine derartige Hydraulikanlage ist in EP 1 782 669 A1 beschrieben. Diese Hydraulikanlage für eine pneumatische Sämaschine ist zum Antrieb eines Gebläses über einen Hydraulikmotor und der Beaufschlagung von Hydraulikzylindern zum Drücken der Seitensektionen in Richtung des Bodens vorgesehen. Hierzu zweigt von der zu dem Gebläse führenden Druckleitung eine zu den Seitensektionen zugeordneten Hydraulikzylindern führende Zweigleitung ab. Zur Beaufschlagung der den Seitensektionen zugeordneten Hydraulikzylinder steht lediglich der in der zu dem Gebläse führenden Druckleitung jeweils anstehende Hydraulikdruck zur Verfügung. Aus Energieeffizienzgründen und zur Anpassung der Gebläseleistung an die jeweiligen Einsatzbedingungen, wie beispielsweise Menge des ausgebrachten Saatgutes, Anpassung an variierende Arbeitsbreiten durch Teilbreitenschaltung, steht in der zu dem weiteren Verbraucher führenden Zweigleitung und somit dem weiteren Verbraucher selbst lediglich ein stark variierender Hydraulikdruck, der teilweise zu niedrig ist, nur zur Verfügung. Somit ist die Arbeitsweise des weiteren Verbrauchers in der gewünschten Qualität und/oder Intensität stark von dem Variieren in Abhängigkeit von dem aufgrund der Anpassung der Gebläseleistung sich verändernden Hydraulikdruck in der zu der Hydraulikmotor des Gebläses führenden Leitung zwangsweise abhängig.

Der Erfindung liegt die Aufgabe zu Grunde, eine Hydraulikanlage vorzuschlagen, die einerseits angepasst an die erforderliche Gebläseleistung dem das Gebläse zugeordneten Hydraulikmotor ein entsprechenden Hydraulikdruck zur Verfügung stellt, jedoch andererseits immer einen ausreichenden Hydraulikdruck für den weiteren Verbraucher unabhängig von der Variation des an dem Hydraulikmotor anstehenden Hydraulikdruckes gewährleistet.

Diese Aufgabe wird erfindungsgemäß dadurch gelöst, dass in der Zweigleitung zwischen der Abzweigung und dem weiteren Verbraucher zumindest eine eine Antriebswelle aufweisende Hydraulikpumpe angeordnet ist, dass die Antriebswelle der Hydraulikpumpe über geeignete Kraftübertragungsmittel mit der Abtriebswelle des Hydraulikmotors kraftschlüssig verbunden ist.

Infolge dieser Maßnahmen wird durch die mit dem Hydraulikmotor des Gebläses kraftschlüssig verbundene Hydraulikpumpe der erforderliche Hydraulikdruck für den weiteren Verbraucher in einfacher Weise unabhängig von dem in der zu dem das Gebläse an treibenden Hydraulikmotor führenden Druckleitung anstehenden Hydraulikdruck sicher erzeugt.

In einer bevorzugten Ausführungsform wird der kraftschlüssige Anschluss der Antriebswelle der Hydraulikpumpe mit dem Hydraulikmotor dadurch verwirklicht, dass der das Gebläse antreibende Hydraulikmotor eine Durchtriebswelle aufweist, dass die Durchtriebswelle des Hydraulikmotors mit der Antriebswelle der Hydraulikpumpe kraftschlüssig verbunden ist. Hierdurch wird die Grundvoraussetzung dafür geschaffen, dass die Hydraulikpumpe in unmittelbarer Nähe zu dem Hydraulikmotor angeordnet, im Idealfall sogar direkt angeflanscht werden kann.

In einer Ausführungsform ist vorgesehen, dass die Abzweigung mit der abzweigenden Zweigleitung in der zu dem Hydraulikmotor führenden Druckleitung angeordnet und der der weitere Verbraucher über eine Verbindungsleitung mit der Rücklaufleitung verbunden ist. Diese Variante ist sinnvoll, wenn über die zu dem Hydraulikmotor führende Druckleitung in jeder Betriebssituation eine genügend große Menge Hydrauliköl zur Verfügung gestellt werden kann.

In einer alternativen Ausführungsform ist vorgesehen, dass die Abzweigung mit der abzweigenden Zweigleitung in der an dem Hydraulikmotor angeschlossenen Rücklaufleitung angeordnet und der der weitere Verbraucher über eine Verbndungsleitung ebenfalls mit der Rücklaufleitung verbunden ist. Diese Variante ist sinnvoll, wenn über die zu dem Hydraulikmotor führende Druckleitung unabhängig von der jeweiligen Betriebssituation in jedem Fall unabhängig von eventuellen Schwankungen und unvorhergesehenen Betriebssituationen immer eine ausreichend große Hydraulikölmenge für den weiteren Verbraucher zur Verfügung stehen muss.

Insbesondere bei einer keine eigene Hydraulikanlage mit einer angetriebenen Hydraulikpumpe zur Erzeugung eines Hydraulikdruckes aufweisenden landwirtschaftlichen Verteilmaschine ist vorgesehen, dass die Druckleitung der Hydraulikpumpe der Hydraulikanlage der Verteilmaschine an den weiteren Verbraucher angeschlossen ist.

Um die der landwirtschaftlichen Verteilmaschine zugeordneten Bearbeitungsorgane, wie Dünger- oder Säschare und/oder Seitensektionen zur Erzeugung eines Druckes in Richtung des Bodens, wie beispielsweise Schardruck in einfacher Weise beaufschlagen zu können, ist vorgesehen, dass der weitere Verbraucher zumindest ein Hydraulikzylinder ist.

Eine besonders vorteilhafte Ausgestaltung der Kombination von dem das Gebläse antreibenden Hydraulikmotor und der für den weiteren Verbraucher den erforderlichen Hydraulikdruck erzeugenden Hydraulikpumpe zur Schaffung einer sehr kompakten Bauweise dieser Einheit ist vorgesehen, dass die Hydraulikpumpe mittels geeigneter Mittel an den Hydraulikmotor angeflanscht ist.

Bei Hydraulikanlagen, bei denen an den zumindest einen Hydraulikmotor und an den zumindest einen weiteren Verbraucher jeweils Rücklaufleitungen angeschlossen sind, ist vorgesehen, dass die zumindest eine Druckleitung und die zumindest eine Rücklaufleitung mit der Hydraulikanlage eines die Verteilmaschine ziehenden und/oder tragenden Ackerschleppers über geeignete Kupplungsmittel verbunden sind. Infolge dieser Maßnahmen können die Hydraulikanlage der landwirtschaftlichen Verteilmaschine und die Hydraulikanlage des die Verteilmaschine ziehenden und/oder tragenden Ackerschleppers in einfacher Weise über die Kupplungsmittel miteinander verbunden werden.

Weitere Einzelheiten der Erfindung sind der Beispielsbeschreibung und den Zeichnungen zu entnehmen. Die Zeichnungen zeigen
- Fig.1: einen ersten Hydraulikplan einer Hydraulikanlage zum Antrieb eines Gebläses und zumindest einem weiteren als druckbeaufschlagten Hydraulikzylinder ausgebildeten weiteren Verbraucher einer landwirtschaftlichen Verteilmaschine in vereinfachter Prinzipdarstellung und
- Fig.2: einen ersten Hydraulikplan einer Hydraulikanlage zum Antrieb eines Gebläses und zumindest einem weiteren als druckbeaufschlagten Hydraulikzylinder ausgebildeten weiteren Verbraucher einer landwirtschaftlichen Verteilmaschine in vereinfachter Prinzipdarstellung.

In den Hydraulikplänen der nachstehend erläuterten Ausführungsbeispiele sind mittels Pfeile die Durchflussrichtung Richtungen in den jeweiligen Leitungen in erläuternder Weise eingezeichnet.

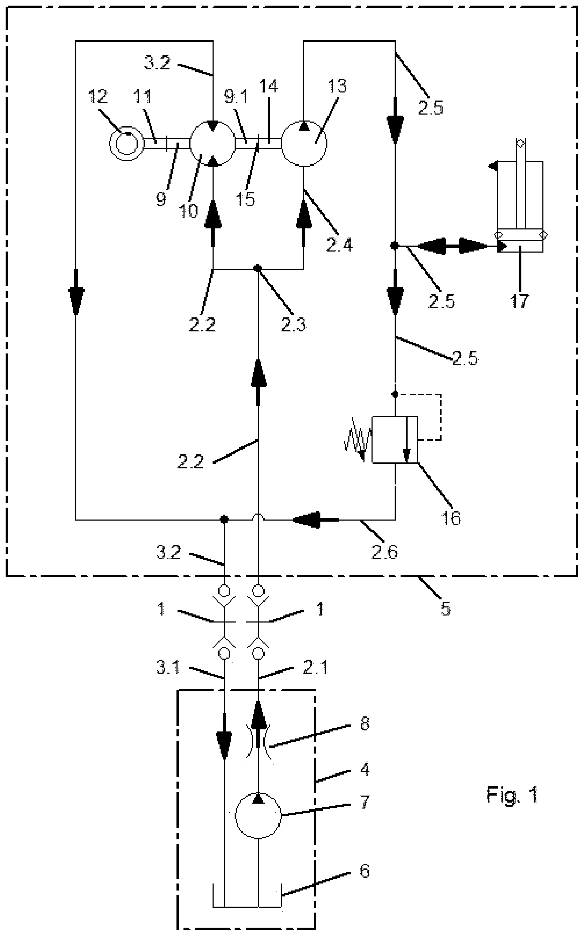

Der Hydraulikplan gemäß Fig.1 zeigt die über die als Steckkupplungen 1 ausgebildeten Kupplungsmitteln miteinander verbundenen Hydraulikleitungen 2.1 und 3.1 der Hydraulikanlage 4 des die nicht dargestellte landwirtschaftliche Verteilmaschine und nicht dargestellten ziehenden Ackerschleppers und mit den Hydraulikleitungen 2.2 und 3.2 der Hydraulikanlage 5 der nicht dargestellten als pneumatische Sämaschine ausgebildeten landwirtschaftlichen Verteilmaschine in vereinfachter Prinzipdarstellung.

Die Hydraulikanlage 4 des Ackerschleppers weist zumindest einen Hydraulikölvorrat in einem Hydrauliktank 6, eine angetriebene Hydraulikpumpe 7 und Durchflusseinstellelemente 8, zumindest eine Druckleitung 2.1 mit Kupplungsmitteln 1 an ihrem Ende und zumindest eine Rücklaufleitung 3.1 mit als Steckkupplung ausgebildeten Kopplungsmittel 1 an ihrem Ende auf.

Die Hydraulikanlage 5 der Sämaschine weist eine Druckleitung 2.2 auf, die über ein als Steckkupplung ausgebildete Kupplungsmittel 1 mit der Steckkupplung der Druckleitung 2.1 der Hydraulikanlage 4 des Schleppers verbunden ist, und einer Rücklaufleitung 3.2, die ebenfalls über ein als Steckkupplung ausgebildetes Kupplungsmittel 1 mit der Steckkupplung 1 der Rücklaufleitung 3.1 der Hydraulikanlage 4 des Schleppers verbunden ist, auf.

Die Hydraulikanlage 5 der Sämaschine weist weiterhin einen an die Druckleitung 2.2 angeschlossenen und von dieser angetriebenen und eine Abtriebswelle 9 aufweisenden Hydraulikmotor 10 auf. Die Abtriebswelle 9 des Hydraulikmotors 10 ist kraftschlüssig mit der Antriebswelle 11 des Gebläses 12 der Sämaschine verbunden. An den Hydraulikmotor 10 ist die Rücklaufleitung 3.2 angeschlossen. Über den Hydraulikmotor 10 wird somit das Gebläse 12 angetrieben.

Von der Druckleitung 2.2 zweigt an der Abzweigung 2.3 die zu einer in der Hydraulikanlage 5 angeordneten Hydraulikpumpe 13 führende als Zweigleitung 2.4 ausgebildete Druckleitung ab. Somit ist die Abzweigung 2.3 mit der abzweigenden Zweigleitung 2.4 in der zu dem Hydraulikmotor 10 führenden Druckleitung 2.2 angeordnet. Die Hydraulikpumpe 13 weist die Antriebswelle 14 auf, die über geeignete Kraftübertragungsmittel 15 mit der Abtriebswelle 9 des Hydraulikmotors 10 kraftschlüssig verbunden. Im Ausführungsbeispiel weist die Abtriebswelle 9 des Hydraulikmotors 10 eine als aus der anderen Seite des Hydraulikmotors 10 austretende Durchtriebswelle 9.1 auf, die über die als Kupplung ausgebildeten Kraftübertragungsmittel 15 mit der Antriebswelle 14 verbunden ist. Somit wird die Hydraulikpumpe 13 von dem Hydraulikmotor 10 angetrieben. An den Druckanschluss der Hydraulikpumpe 13 ist die zu dem weiteren als Hydraulikzylinder 17 ausgebildeten weiteren Verbraucher führende Verbindungsleitung 2.5 angeschlossen. Von der Verbindungsleitung 2.5 zweigt hinter dem Hydraulikzylinder 15 die weitere Rücklaufleitung 2.6 ab, in welcher das vorzugsweise einstellbare Überdruckventil 16 angeordnet ist. Die Rücklaufleitung 2.6 ist mit der Rücklaufleitung 3.2 verbunden. Somit ist der Hydraulikzylinder 17 auch über die Verbindungsleitung 2.5 mit der Rücklaufleitung 2.6 und 3.2 verbunden ist. Somit ist die Druckleitung 2.5 der Hydraulikpumpe 13 der Hydraulikanlage 5 der Verteilmaschine an den als Hydraulikzylinder 17 ausgebildeten weiteren Verbraucher angeschlossen.

Zur Erreichung einer sehr kompakten Bauweise kann in nicht dargestellter Weise die Hydraulikpumpe 13 mittels geeigneter Mittel an den Hydraulikmotor 10 direkt angeflanscht sein.

In den Hydraulikplänen der nachstehend erläuterten Ausführungsbeispiele sind mittels Pfeile die Durchflussrichtung Richtungen in den jeweiligen Leitungen in erläuternder Weise eingezeichnet.

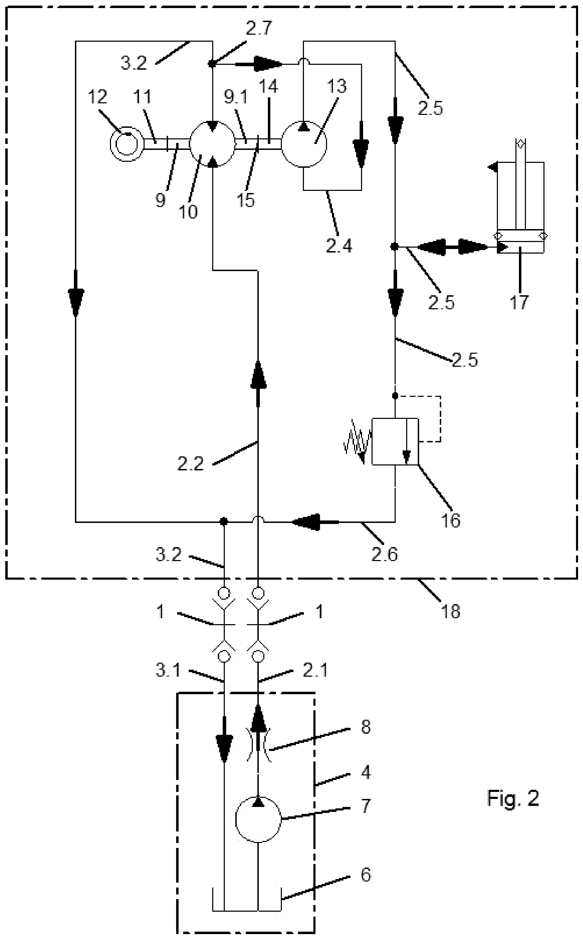

Der Hydraulikplan 18 gemäß Fig.2 unterscheidet sich von dem Hydraulikplan 5 gemäß Fig.1 durch einen anderen Anschluss der Zuführleitung 2.4 zu den Sauganschluss der Hydraulikpumpe 13. Die Abzweigung 2.7 der als Zuführleitung 2.4 ausgebildeten Zweigleitung ist in der Rücklaufleitung 3.2 des Hydraulikmotors 10 angeordnet. Der als weitere Verbraucher ausgebildete Hydraulikzylinder 17 ist über die Rücklaufleitung 2.6 ebenfalls mit der Rücklaufleitung 3.2 verbunden.

## Patentansprüche

1. Hydraulikanlage (5, 16) für eine pneumatische landwirtschaftliche Verteilmaschine, insbesondere Sämaschine, mit einer Druckleitung (2.2) als Zuleitung und einer Rücklaufleitung (3.2), zumindest einem von über die Druckleitung (2.2) als ersten Verbraucher einen ein Gebläse (12) antreibenden eine Abtriebswelle (9, 9.1) aufweisenden Hydraulikmotor (10), zumindest einem an die an zumindest eine der Leitungen (2.2, 3.2) an einer Abzweigung (2.3, 2.7) abzweigenden Zweigleitung (2.4) angeschlossenen weiteren Verbraucher (17), **dadurch gekennzeichnet, dass** in der Zweigleitung (2.4) zwischen der Abzweigung (2.3, 2.7) und dem weiteren Verbraucher (17) zumindest eine Antriebswelle (14) aufweisende Hydraulikpumpe (13) angeordnet ist, dass die Antriebswelle (14) der Hydraulikpumpe (13) über geeignete Kraftübertragungsmittel (15) mit der Abtriebswelle (9, 9.1) des Hydraulikmotors (10) kraftschlüssig verbunden ist.

2. Hydraulikanlage nach Anspruch 1, **dadurch gekennzeichnet, dass** der das Gebläse (12) antreibende Hydraulikmotor (10) eine Durchtriebswelle (9.1) aufweist, dass die Durchtriebswelle (9.1) des Hydraulikmotors (10) mit der Antriebswelle (14) der Hydraulikpumpe (13) kraftschlüssig verbunden ist.

3. Hydraulikanlage nach zumindest einem der vorstehenden Ansprüche, **dadurch gekennzeichnet, dass** die Abzweigung (2.3) mit der abzweigenden Zweigleitung (2.4) in der zu dem Hydraulikmotor (10) führenden Druckleitung (2.2) angeordnet und der der weitere Verbraucher (17) über eine Verbindungsleitung (2.6) mit der Rücklaufleitung (3.2) verbunden ist.

4. Hydraulikanlage nach zumindest einem der vorstehenden Ansprüche, **dadurch gekennzeichnet, dass** die Abzweigung (2.7) mit der abzweigenden Zweigleitung (2.4) in der an dem Hydraulikmotor (10) angeschlossenen Rücklaufleitung (3.2) angeordnet und der der weitere Verbraucher (17) über eine Verbindungsleitung (2.6) ebenfalls mit der Rücklaufleitung (3.2) verbunden ist.

5. Hydraulikanlage nach zumindest einem der vorstehenden Ansprüche, **dadurch gekennzeichnet, dass** die Druckleitung (2.5 der Hydraulikpumpe (13) der Hydraulikanlage (5, 18) an den weiteren Verbraucher (17) angeschlossen ist.

6. Hydraulikanlage nach zumindest einem der vorstehenden Ansprüche, **dadurch gekennzeichnet, dass** der weitere Verbraucher (17) als zumindest ein Hydraulikzylinder ist.

7. Hydraulikanlage nach zumindest einem der vorstehenden Ansprüche, **dadurch gekennzeichnet, dass** die Hydraulikpumpe (13) mittels geeigneter Mittel an den Hydraulikmotor (10) angeflanscht ist.

8. Hydraulikanlage nach zumindest einem der vorstehenden Ansprüche, wobei an den zumindest einen Hydraulikmotor (10) und an den zumindest einen weiteren Verbraucher (17) jeweils Rücklaufleitungen (3.2) angeschlossen sind, **dadurch gekennzeichnet, dass** die zumindest eine Druckleitung (2.2) und die zumindest eine Rücklaufleitung (3.2) mit der Hydraulikanlage (4) eines eine Verteilmaschine ziehenden und/oder tragenden Ackerschleppers über geeignete Kupplungsmittel (1) verbunden sind.

## Claims

1. Hydraulic system (5, 16) for a pneumatic agricultural distributing machine, in particular a seeding machine, having a pressure line (2.2) as supply line and a return line (3.2), at least one hydraulic motor (10) which drives a blower (12) via the pressure line (2.2) as first consumer and which has an output shaft (9, 9.1), and at least one further consumer (17) which is connected to the branch line (2.4) which branches off at at least one of the lines (2.2, 3.2) at a branch-off (2.3, 2.7), **characterized in that** at least one hydraulic pump (13) having a drive shaft (14) is arranged in the branch line (2.4) between the branch-off (2.3, 2.7) and the further consumer (17), and **in that** the drive shaft (14) of the hydraulic pump (13) is non-positively connected to the output shaft (9, 9.1) of the hydraulic motor (10) via suitable force-transmission means (15).

2. Hydraulic system according to Claim 1, **characterized in that** the hydraulic motor (10) driving the blower (12) has a through-drive shaft (9.1), and **in that** the through-drive shaft (9.1) of the hydraulic motor (10) is non-positively connected to the drive shaft (14) of the hydraulic pump (13).

3. Hydraulic system according to at least one of the preceding claims, **characterized in that** the branch-off (2.3) with the branching-off branch line (2.4) is arranged in the pressure line (2.2) leading to the hydraulic motor (10) and the further consumer (17) is connected to the return line (3.2) via a connecting line (2.6).

4. Hydraulic system according to at least one of the preceding claims, **characterized in that** the branch-off (2.7) with the branching-off branch line (2.4) is arranged in the return line (3.2) connected to the hydraulic motor (10) and the further consumer (17) is likewise connected to the return line (3.2) via a connecting line (2.6).

5. Hydraulic system according to at least one of the preceding claims, **characterized in that** the pressure line (2.5) of the hydraulic pump (13) of the hydraulic system (5, 18) is connected to the further consumer (17) .

6. Hydraulic system according to at least one of the preceding claims, **characterized in that** the further consumer (17) is at least one hydraulic cylinder.

7. Hydraulic system according to at least one of the preceding claims, **characterized in that** the hydraulic pump (13) is flanged on the hydraulic motor (10) using suitable means.

8. Hydraulic system according to at least one of the preceding claims, wherein return lines (3.2) are in each case connected to the at least one hydraulic motor (10) and to the at least one further consumer (17), **characterized in that** the at least one pressure line (2.2) and the at least one return line (3.2) are connected via suitable coupling means (1) to the hydraulic system (4) of a farm tractor which pulls and/or carries a distributing machine.

## Revendications

1. Installation hydraulique (5, 16) pour une machine de distribution agricole pneumatique, en particulier semoir, avec une conduite sous pression (2.2) comme conduite d'alimentation et une conduite de retour (3.2), avec au moins un moteur hydraulique (10) présentant un arbre de sortie (9, 9.1) et entraînant via la conduite sous pression (2.2) une soufflante (12) comme premier consommateur, avec au moins un autre consommateur (17) raccordé à la conduite forcée (2.4) dérivée d'au moins une des conduites (2.2, 3.2) à un branchement (2.3, 2.7), **caractérisée en ce qu'**au moins une pompe hydraulique (13) présentant un arbre d'entraînement (14) est disposée dans la conduite forcée (2.4) entre le branchement (2.3, 2.7) et l'autre consommateur (17), **en ce que** l'arbre d'entraînement (14) de la pompe hydraulique (13) est relié par serrage, par des moyens de transmission de force (15) appropriés, à l'arbre de sortie (9, 9.1) du moteur hydraulique (10).

2. Installation hydraulique selon la revendication 1, **caractérisée** en ce le moteur hydraulique (10) entraînant la soufflante (12) présente un arbre traversant (9.1), en ce que l'arbre traversant (9.1) du moteur hydraulique (10) est relié par serrage à l'arbre d'entraînement (14) de la pompe hydraulique (13).

3. Installation hydraulique selon au moins une des revendications précédentes, **caractérisée en ce que** le branchement (2.3) avec la conduite forcée dérivée (2.4) est disposé dans la conduite sous pression (2.2) menant au moteur hydraulique (10) et l'autre consommateur (17) est raccordé à la conduite de retour (3.2) par une conduite de raccordement (2.6).

4. Installation hydraulique selon au moins une des revendications précédentes, **caractérisée en ce que** le branchement (2.7) avec la conduite forcée dérivée (2.4) est disposé dans la conduite de retour (3.2) raccordée au moteur hydraulique (10) et l'autre consommateur (17) est également raccordé à la conduite de retour (3.2) par une conduite de raccordement (2.6).

5. Installation hydraulique selon au moins une des revendications précédentes, **caractérisée en ce que** la conduite sous pression (2.5) de la pompe hydraulique (13) de l'installation hydraulique (5, 18) est raccordée à l'autre consommateur (17).

6. Installation hydraulique selon au moins une des revendications précédentes, **caractérisée en ce que** l'autre consommateur (17) est au moins un cylindre hydraulique.

7. Installation hydraulique selon au moins une des revendications précédentes, **caractérisée en ce que** la pompe hydraulique (13) est bridée au moteur hydraulique (10) à l'aide de moyens adéquats.

8. Installation hydraulique selon au moins une des revendications précédentes, dans laquelle des conduites de retour (3.2) sont respectivement raccordées audit au moins un moteur hydraulique (10) et audit au moins un autre consommateur (17), **caractérisée en ce que** ladite au moins une conduite sous pression (2.2) et ladite au moins une conduite de retour (3.2) sont raccordées à l'installation hydraulique (4) d'un tracteur agricole remorquant et/ou portant une machine de distribution par des moyens d'attelage adéquats (1).
